# EUROPEAN PATENT SPECIFICATION

(11) **EP 1 565 778 B1**
(45) Date of publication and mention of the grant of the patent: **06.04.2011**
(21) Application number: 03779040.9
(22) Date of filing: 28.11.2003
(51) Int. Cl.: G02B 23/02

(54) **TELESCOPE SYSTEM, AND A METHOD FOR COMBINING LIGHT BEAMS**
TELESKOPSYSTEM UND VERFAHREN ZUM KOMBINIEREN VON LICHTSTRAHLEN
SYSTEME TELESCOPIQUE, ET PROCEDE DE COMBINAISON DE FAISCEAUX DE LUMIERE

(30) Priority: 28.11.2002 NL 1022016
(43) Date of publication of application: 24.08.2005
(73) Proprietor: Nederlandse Organisatie voor Toegepast -Natuurwetenschappelijk Onderzoek TNO, 2628 VK Delft (NL)
(72) Inventor: VAN BRUG, Hedser, NL-2548 WZ Den Haag (NL); SNIJDERS, Bart, NL-3053 KP Rotterdam (NL)
(74) Representative: Winckels, Johannes Hubertus F.
(86) International application number: PCT/NL2003/000846
(87) International publication number: WO 2004/049033

(56) References cited:
- US-A- 4 950 063
- US-A- 4 953 964
- US-A- 5 113 284
- F. MERKLE: "Synthetic-aperture imaging with the European Very Large Telescope" JOURNAL OF THE OPTICAL SOCIETY OF AMERICA - A, vol. 5, no. 6, June 1988 (1988-06), pages 904-913, XP002248969 NEW YORK US cited in the application

## Description

The invention relates to a telescope system provided with at least two jointly directable telescopes with respective entrance pupils, the telescope system being provided with an optical system arranged for capturing respective light beams coming from the telescopes and passing them on via respective exit pupils to light beam combining means, the optical system being arranged for adjusting positions of the exit pupils during a movement - desired for directing - of the telescopes, such that lateral distances between those exit pupils are homothetic to the lateral distances between the entrance pupils of the telescopes.

Such a telescope system is known from practice, see the article by Fritz Merkle in the Journal of the Optical Society of America A/Vol5, nr. 6, June 1988, p. 904, entitled "Synthetic-aperture imaging with the European Very Large Telescope". Merkle describes a prototype of the Very Large Telescope (VLT) of the European Southern Observatory in Chile. The VLT is provided with four main telescopes which are provided with relatively large mirrors with diameters of more than 8 m. These telescopes are disposed at a distance from each other in a particular configuration. During use, the telescopes are jointly directed to far away celestial bodies. The light originating from those celestial bodies is captured by the four primary mirrors and passed on to a beamcombiner. The system further comprises light detecting means for detecting the light combined by the beamcombiner.

From practice, different methods are known for combining the light beams captured and passed on by the telescopes. A highly advantageous method with which a high resolution can be obtained is optical interferometry. Light beams are then coherently combined such that an interferometric pattern is formed. To effect coherence of the light beams to be combined, the VLT is provided with delay lines which have been provided between the light detecting system and the four primary mirrors. The delay lines are designed for continuously compensating- at least on the optical axis - optical path length differences between the light beams coming from the four telescopes. The continuous compensation of path length differences for the purpose of maintaining coherence is particularly desirable if the four telescopes are continuously, jointly moved for adjustment to the earth's rotation in order to remain constantly directed to a particular part of the universe.

If only a compensation of path length differences occurring on the optical axis takes place, an image with only a relatively small field of view can be obtained. An advantageous method with which a relatively large field of view is obtained is synthetic aperture synthesis, also called optical aperture synthesis, or homothetic mapping, see the article by Merkle mentioned. In synthetic aperture synthesis, the light beams are combined such that the exit pupils of the telescope system are homothetic to its entrance pupils. The light detecting means of the system then detect the light beams entering as if they were beams coming from one large tilting telescope.

The entrance pupils mentioned are the respective entrance pupils of the at least two telescopes of the system. During movement of the telescopes for the purpose of directing the system, the mutual positions of these entrance pupils can change. In particular, the effective mutual distances as well as longitudinal positions of the entrance pupils relative to each other can change during telescope movements.

Merkle suggests effecting synthetic aperture synthesis by using four translatable mounts which are provided with mirror assemblies, which pass the light coming from the delay lines mentioned on to a light detector. Each of the mirror assemblies is provided with a collecting mirror, a parabolic mirror and a deformable mirror. Light coming from a delay line is reflected during use by the respective collecting mirror via the parabolic mirror to the deformable mirror, which deformable mirror then reflects the light via the same parabolic mirror to a beam combining mirror. Through translation of these mirror assemblies, lateral exit pupils can be adjusted to the change of lateral entrance pupil positions for the purpose of the aperture synthesis. Moreover, each of these mirror assemblies is provided with a deformable mirror for performing longitudinal pupil corrections.

A drawback of the translatably arranged mirror assemblies with deformable mirrors suggested by Merkle is that then, at least eight movements have to be accurately driven, i.e. the movements of the four mounts of those mirror assemblies, and the deformations of the four deformable mirrors. The control is then further complicated in that the deformation of each deformable mirror depends on the movement of the mount on which this mirror has been provided. Mutually directing these mirrors is relatively cumbersome. In addition, such a pupil correcting system is relatively costly and relatively little durable in connection with the relatively large number of moving parts of which it consists. Moreover, use of deformable mirrors for performing correction of longitudinal pupil position is relatively complex.

The present invention contemplates an alternative telescope system of the type described in the opening paragraph, with which synthetic aperture synthesis can be carried out in a relatively simple manner, in particular for obviating the drawbacks mentioned.

To this end, the telescope system according to the invention is characterized in that the optical system is provided with at least two pupil compensating mirrors for reflecting the light beams coming from the at least two telescopes, which compensating mirrors are arranged for performing substantially the same movements as the telescopes.

With this system, the exit pupils can be corrected in a relatively simple manner to changes of the entrance pupils for the purpose of homothetic aperture synthesis of the light beams. The compensating mirrors can for instance be arranged so as to be tiltable if the respective telescopes are tiltable. During movement of the telescopes, the compensating mirrors can perform the same movement. As a result, at least transversal pupil-position and diameter ratios can be maintained. The movement of the compensating mirrors can also effect the desired corrections of longitudinal pupil positions. As a result, the angle relative to the earth's surface at which the light beams enter the telescopes system, at least the telescopes, can moreover be always equal to the angle relative to the earth's surface at which those light beams leave the at least one compensating mirror. Delay lines can for instance be used for maintaining coherence of the light beams during movement of the compensating mirrors.

An additional advantage is that thus, the system can be set up in a relatively small space. Moreover, the separate compensating mirrors can simply be disposed at fixed positions relative to the telescopes, so that substantially no optical path length differences on the optical axis occur during movement, for instance tilting and/or rotation, of those compensating mirrors. Further, it is advantageous when the optical system is provided with at least one directing mirror for capturing light beams coming from the compensating mirrors and directing them to the light beam combining means. As a result, the beam combining means can for instance be disposed at a fixed position, while the directing mirror effects that the light, coming from the compensating mirrors is passed on to those light combining means. In an alternative embodiment, the system is not provided with such a directing mirror. In that case, the light combining means can for instance be movably arranged for capturing the light coming from the moving light compensating mirrors.

According to a preferred embodiment of the invention, the set-up of the compensating mirrors is homothetic to the set-up of the respective telescopes. As a result, the desired optical aperture synthesis can be achieved relatively easily, at least by having the compensating mirrors, during use, performing the same movement as the respective telescopes. Due to this relatively simple design, the optical system can relatively easily be integrated in a telescope system.

The invention further relates to a method for combining light beams from at least two telescopes while using an optical system.

Such a method is also known from Merkle. A drawback of the known method is, that the optical system is relatively complicated and therefore relatively difficult to control for yielding/ the desired homothetic pupil-mapping. Furthermore, the parts of the optical system perform relatively complicated movements during use.

The present invention contemplates a relatively simple method for combining the light beams. Tot this end, the method according to the invention is characterized by the features of claim 16.

The system comprises at least two telescopes and at least two pupil compensating mirrors. According to the method, the telescopes are jointly directed to, for instance, a far away light source. The light beams, captured and passed on by the telescopes are captured separately by the respective compensating mirrors and passed on via respective exit pupils to light beam combining means, for instance for detecting the far away light source. As the compensating mirrors perform substantially the same movement as the respective telescopes, in a simple manner, it can be effected that the exit pupils mentioned are homothetic to the entrance pupils of the telescopes. In this manner, the light captured by the different telescopes can simply be detected continuously according to the principle of synthetic aperture synthesis. The method is carried out in particular by having the compensating mirrors mentioned continuously taking up the same positions and mutual configuration as the respective telescopes. Furthermore, controlling the compensating mirrors can be carried out in a relatively simple manner, for instance by coupling to or integration with a control of the telescopes.

Further elaborations of the invention are described in the subclaims. Presently, the invention will be elucidated with reference to an exemplary embodiment and the Figures. In the Figures:
Fig. 1 schematically shows an interferometer system for aperture synthesis;
Fig. 2 shows a telescope system known from the state of the art;
Fig. 3 shows a schematically represented drawing of a first exemplary embodiment of the invention, wherein a first position of telescopes and of compensating mirrors is represented;
Fig. 4 shows a similar drawing as Fig. 3, wherein a tilting of the telescopes to a second position, and an associated tilting of the compensating mirrors is represented; and
Fig. 5 shows a similar drawing as Fig. 4, wherein the second position of telescopes and associated position of compensating mirrors is represented.

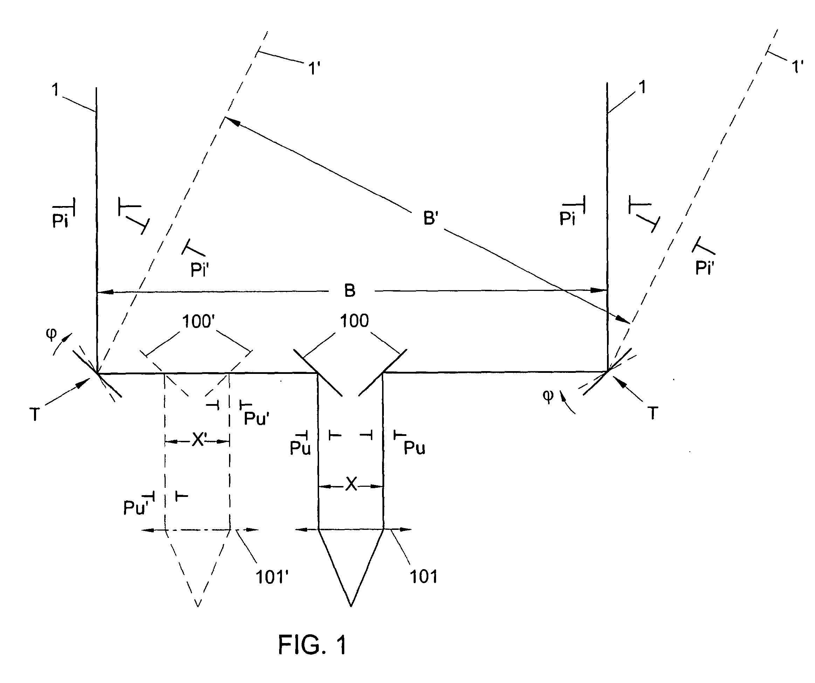

In Fig. 1, schematically, an interferometer system for aperture synthesis is represented. The interferometer system comprises two telescopes T disposed at a distance from each other which, jointly, can be tilted and can be directed for detecting, for instance, parallel incident light beams 1 during a particular measuring period. The system further comprises translatably disposed mirrors 100 of delay lines for compensating optical path length differences of the light beams 1 captured by the telescopes T, in particular for adjusting optical path lengths to each other. These path lengths differences occur during the tilting of the telescopes T, for instance when compensating for the earth's rotation. The delay lines are arranged for passing on the light beams 1 to a beam combining lens 101 for combining the beams, in order that a desired interferometric pattern can be obtained with the aid of light beam detecting means (not shown). The telescopes T are provided with entrance pupils pᵢ, while via the respective exit pupils pᵤ, the light beams 1 are passed on to the combining lens 101.

With a first position of the telescopes, wherein, in the Figure, the telescopes T are drawn in non-interrupted lines, the entrance pupils pᵢ are in the same plane. The length of the associated baseline is indicated with arrow B. The light beams 1 traverse the exit pupils pᵤ - at least on the optical axis - at a mutual distance x. The exit pupils pᵤ are also in one plane.

With the telescopes in the second position, the telescopes T have been tilted through an angle ϕ. In this position, the telescopes T are indicated in broken lines in the Figure. The respective entrance pupils pᵢ' are then no longer in one plane. Moreover, the length B' of the respective baseline has changed relative to the length B in the first position of the telescopes. As shown in the Figure, the mirrors of the delay lines have shifted to positions indicated with 100' for compensation of the optical path length differences having occurred as a result of the tilting of the telescopes T. The respective exit pupils pᵤ' have also shifted relative to each other in longitudinal direction. The longitudinal shifts of the entrance and exit pupils are, at least on the optical axis, homothetic to each other.

It is known that moreover, for obtaining the desired homothetic aperture synthesis, the ratio of the baseline lengths with the different positions of the telescopes is to be equal to the ratio of the respective exit pupils, at least B'/B=x'/x. This means that the lateral entrance and exit pupils are to be homothetic.

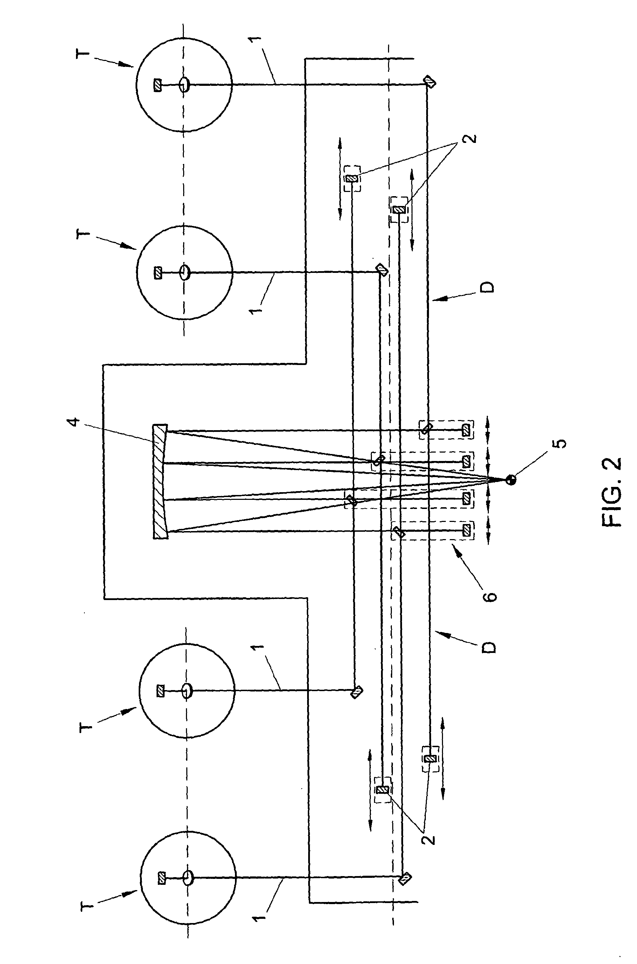

Fig. 2 shows a telescope system known from the state of the art, in particular a schematically represented prototype of the VLT (Merkle). The system is provided with four jointly directable telescopes T. Light beams 1 coming from the telescopes T are passed on via delay lines D and an optical system 3 to light beam combining means 4. The delay lines D are provided with translatably disposed mirrors 2 to compensate optical path length differences. The beam combining means 4 comprise a parabolic mirror 4 collecting the light beams on a detector 5. The optical system 3 is arranged for capturing and passing the respective light beams 1 coming from the telescopes T and delay lines D on to combining mirror 4. To this end, this system known from the state of the art comprises four translatably disposed mirror assemblies 6, provided with different types of mirrors. The translation directions of these assemblies 6 are indicated with arrows. By translating these mirror assemblies 6, during use, lateral pupil exit positions are adjusted to changes of lateral entrance pupil positions of the telescopes. Each mirror assembly comprises a deformable mirror (not shown) for adjusting longitudinal exit pupil positions. Drawbacks of this known system have already been mentioned in the foregoing.

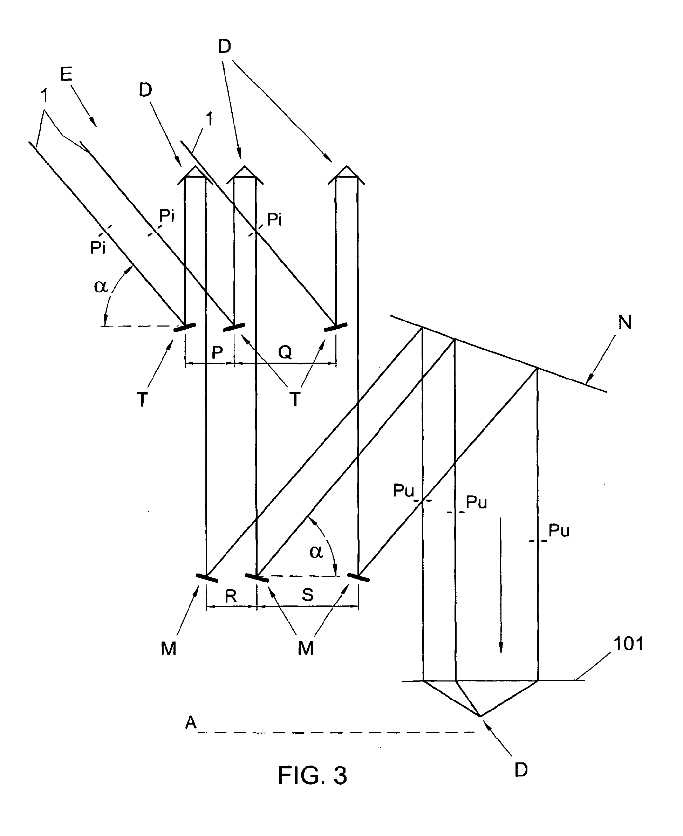

Fig. 3 schematically shows an exemplary embodiment of a telescope system according to the invention. The system is provided with three tiltable telescopes T and delay lines D, and with an optical system M, N for the purpose of homothetic mapping of light beams 1 captured by the telescopes. The light beams enter the telescopes T with a first direction E relative to the earth's surface A. The optical system M, N is arranged for capturing respective light beams 1 coming from the telescopes T and passing them on, via respective exit pupils pᵤ, to light beam combining means 101.

The optical system represented in Fig. 3 is arranged for adjusting positions of the exit pupils pᵤ during a movement of the telescopes T such that lateral distances between those exit pupils pᵤ are homothetic to the lateral distances between the entrance pupils pᵢ of the telescopes T. To this end, the optical system is provided with three pupil compensating mirrors M which, during use, individually reflect the respective light beams 1 coming from the three telescopes T. The three compensating mirrors M are designed to perform substantially the same movement as the telescopes T. In the present exemplary embodiment, the telescopes T are disposed around horizontal axes, so as to be tiltable relative to the surface of the earth. Therefore, the compensating mirrors M are also arranged so as to be tiltable relative to the earth's surface. Moreover, each telescope T and each respective compensating mirror M is disposed on a substantially fixed position, at least non-translatable relative to the earth's surface. In Fig. 3, the earth's surface is schematically drawn in a broken line A.

The set-up of the compensating mirrors M is homothetic to the set-up of the respective telescopes T. In other words: the set-up of the compensating mirrors M is a scaled copy of the set-up of the telescopes T. In the present exemplary embodiment, the telescopes T are disposed in alignment at mutual distances P, Q. Therefore, the compensating M are also disposed in alignment, at mutual distances R, S, while the ratios of the mutual distances remain equal, hence P/Q=R/S. It is noted that Fig. 3 is a schematic representation, in which the telescopes T and compensating mirrors M happen to be drawn in equispaced relation to each other. In that case, optical path length differences can be corrected through the position of the compensating mirrors M, without the use of delay lines. In practice, the telescopes T will be disposed at far greater distances relatively to each other. In that case, the delay lines D are to compensate relatively large optical path length differences. Moreover, in Fig. 3, the delay lines D extend in vertical direction, while in practice, the delay lines D can, for instance, extend in horizontal direction, as represented in Fig. 2.

The exemplary embodiment is further provided with a directing mirror N for capturing light beams 1 coming from the compensating mirrors M and directing them to light beam combining means 101. The light beams 1 are depicted through the combining means 101 in a detection point D. For the purpose of directing the light beams at relatively large tilting angles of the compensating mirrors M, the directing mirror N is both tiltable and translatable.

The system represented in Fig. 3 is used in an advantageous manner in a method for combining light beams of telescopes T while using an optical system. The telescopes are jointly directed to, for instance, a far away light source. The light beams 1 coming from the telescopes 1 are separately captured by the compensating mirrors M and, via respective exit pupils pᵤ, passed on to the light beams combining means 101. According to the invention, it is advantageous to adjust the tilting positions of the compensating mirrors M to the tilting positions of the respective telescopes T such that lateral distances between the exit pupils pᵤ are homothetic to the lateral distances between the entrance pupils pᵢ of the telescopes T. Such a position is represented in Fig. 3. Here, the compensating mirrors M are tilted such that these mirrors M have the light beams 1 exiting therefrom include the same angle α relative to the earth's surface A as the angle α relative to the earth's surface A at which the light beams 1 enter the telescopes: The compensating mirrors M adopt the same tilting position, at least mirrored relative to a vertical plane, as the telescopes T. The light beams coming from the compensating mirrors M are then simply captured by the directing mirror N and passed on to the light beam combining means 101. What is thus achieved, in a surprisingly simple manner, is that the lateral distances of the exit pupils pᵤ are homothetic to the lateral distances of the entrance pupils pᵢ. Moreover, the longitudinal exit pupil positions are homothetic relative to those of the entrance pupils, which is also achieved in an easy manner due to the tilting position of the compensating mirrors M. Therefore, in the represented position, the exemplary embodiment effects that the light beams 1 are combined according to the principle of homothetic aperture mapping.

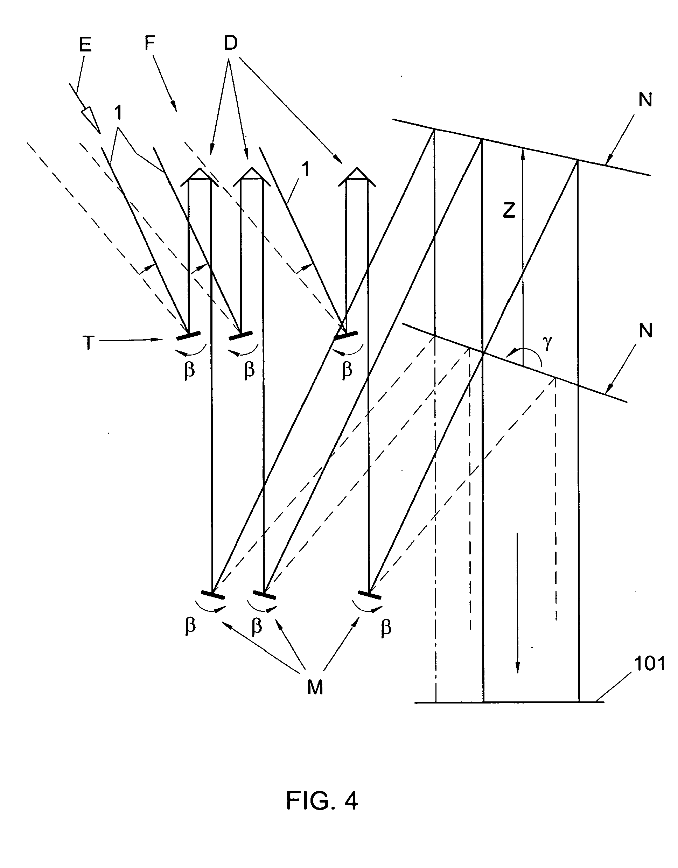

An interferometric observation can simply be carried out in a continuous manner during tilting of the telescopes T, by simply tilting the compensating mirrors M through the same angle so that the homothetic ratio of the entrance and exit pupils is maintained. In Fig. 4, such tilting of the telescopes T and compensating mirrors M is schematically represented. Here, the telescopes T are tilted through an angler β for capturing light beams 1 entering from a second direction F. The path of the light beams entering from the first direction E is drawn in chain-dotted lines. As shown in the Figure, the compensating mirrors M are also tilted through the angle β in order that lateral and longitudinal pupil positions are still homothetic relative to the entrance pupils for the purpose of the aperture synthesis. Preferably, the compensating mirrors M continuously adopt the same tilting positions as the respective telescopes T during tilting of these telescopes. As a result, also during tilting, the entrance and exit pupils remain homothetic relative to each other, so that the homothetic aperture synthesis can be carried out in a continuous manner.

Through the tilting of the compensating mirrors M, the light beams 1 exit those mirrors M at a different angle relative to the earth's surface. The directing mirror N is also tilted through a particular angle y, and translated over a particular distance Z for capturing the light beams coming from the compensating mirrors M and keeping them directed to the combining means 101.

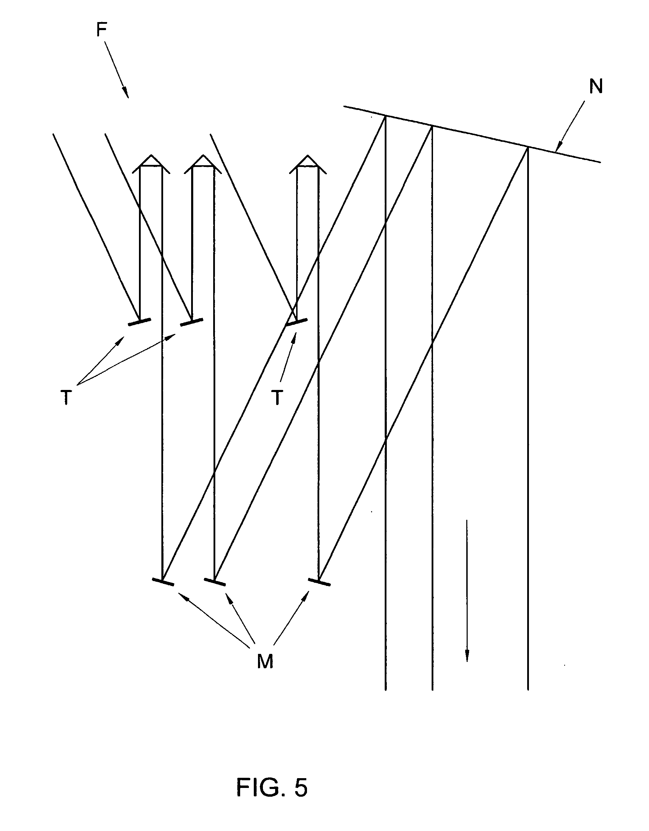

In clarification, Fig. 5 shows once more the final position of the system resulting from this tilting, however, without representation of the light beams entering from the first direction E with the associated first position of the directing mirror N.

Preferably, the system is provided with a control which is arranged for having each compensating mirror M perform, during use, substantially the same movement as the respective telescope T from which the compensating mirror M receives a light beam 1 and passes it on. Therefore, the aperture synthesis can be carried out in an automated manner. Preferably, the control is also coupled to other parts of the telescope system, for instance the delay lines, the directing mirror, the light combining means (not shown), measuring means disposed in measuring point D, sensors and/or other parts of the system. Such a control can for instance comprise one or more computers and/or microcontrollers.

It is self-evident that the invention is not limited to the exemplary embodiment described. Various modifications are possible within the framework of the invention as set forth in the following claims.

For instance, the main telescopes T can for instance be positioned in different configurations relative to each other on earth and/or in space. The telescopes can, for instance, be aligned or not be aligned, in the same or not in the same plane, be placed at the same height and/or at different heights relative to the sea level. The compensating mirrors M can then be disposed in the same configuration.

In addition, the telescopes T and compensating mirrors M can each be movably arranged in various ways, for instance tiltable around horizontal axes, rotatable about vertical axes relative to the earth's surface, and/or translatable.

Further, the optical system can be provided with one or more directing mirrors N. When different directing mirrors are used, these can, for instance, be coupled to each other in order that the mirrors can perform identical directing movements. The directing mirror N can be disposed so as to be moveable and/or translatable in different directions.

Further, the light combining means can for instance be moveably disposed for capturing light beams coming from the optical system. This can for instance be desirable when the optical system is not provided with one or more directing mirrors for directing light to the light combining means.

The telescope system can further be provided with various other, optical elements, for instance lenses, mirrors and the like for directing the light beams in a desired direction.

## Claims

1. A telescope system, provided with at least two jointly directable telescopes (T) with respective entrance pupils (pᵢ), the telescope system being provided with an optical system (M, N) arranged for capturing respective light beams (1) coming from the telescopes (T) and passing them on via respective exit pupils (pᵤ) to light beam combining means, said optical system (M, N) being arranged for adjusting positions of said exit pupils (pᵤ) during a movement - desired for directing - of the telescopes (T), such that lateral distances between those exit pupils (pᵤ) are homothetic to the lateral distances between the entrance pupils (pᵢ) of the telescopes (T), while the optical system is provided with at least two pupil compensating mirrors (M) for reflecting the said light beams (1) coming from the at least two telescopes (T), **characterised in that** compensating mirrors (M) are arranged for performing substantially the same movements as the telescopes (T).

2. A telescope system according to claim 1, wherein the telescopes (T) and said at least two compensating mirrors are arranged so as to be tiltable around horizontal axes relative to the earth's surface.

3. A telescope system according to any one of the preceding claims, wherein the telescopes (T) and the at least two compensating mirrors (M) are arranged for rotation about vertical axes relative to the earth's surface.

4. A telescope system according to at least claim 1, wherein the system is provided with a control which is arranged to have each compensating mirror (M), at least during use, perform the same movement as the respective telescope (T) from which this compensating mirror (M) receives and passes on a light beam.

5. A telescope system according to any one of the preceding claims, wherein the telescopes (T) and each respective compensating mirror (M) are disposed on a substantially fixed position relative to the earth's surface.

6. A telescope system according to any one of the preceding claims, wherein said light beam combining means are moveably arranged for capturing light beams coming from said optical system.

7. A telescope system according to at least claim 1, wherein the optical system is provided with at least one directing mirror (N) for capturing light beams coming from the compensating mirrors (M) and directing them to the light beam combining means.

8. A telescope system according to at least claims 2 and 7, wherein the directing mirror (N) is disposed so as to be tiltable.

9. A telescope system according to claim 8, wherein the directing mirror (N) is also disposed so as to be translatable.

10. A telescope system according to any one of the preceding claims, wherein the set-up of the compensating mirrors (M) is homothetic to the set-up of the respective telescopes (T).

11. A telescope system according to any one of the preceding claims, wherein the system is also provided with delay lines (D) for compensating optical path length differences between said light beams.

12. A telescope system according to claim 11, wherein said delay lines (D) are disposed between the telescopes (T) and the optical system (M, N).

13. A telescope system according to any one of the preceding claims, wherein said compensating mirrors (M) are arranged for passing on the light beams coming from the telescopes (T) at the same angle (α) relative to the earth's surface as the angle at which the light beams are captured, during use, by the telescopes (T).

14. A telescope system according to any one of the preceding claims, wherein the system is disposed on earth.

15. A telescope system according to at least claim 1, wherein the system is disposed substantially outside of the earth's atmosphere, for instance on the moon⁻or in space.

16. A method for combining light beams from at least two telescopes (T) while using an optical system, wherein the at least two telescopes (T) comprise respective entrance pupils (pᵢ), while said optical system (M, N) is at least provided with at least two pupil compensating mirrors (M), the method comprising at least the following steps:
- the telescopes (T) are jointly directed to, for instance, a far away light source; and
- light beams (1) coming from the telescopes (T) are captured by the compensating mirrors (M) and, via respective exit pupils (pᵤ), passed on to light beam combining means, **characterised in that**
the compensating mirrors (M) perform substantially the same movements as the respective telescopes, such that lateral distances between said exit pupils (pᵤ) are homothetic to the lateral distances between said entrance pupils (pᵢ) of the telescopes (T).

17. A method according to claim 16, wherein light beams coming from the compensating mirrors (M) are captured by a directing mirror (N) and are passed on to light beam combining means.

18. A method according to claim 16 or 17, wherein the telescopes (T) and the compensating mirrors (M) are tilted substantially continuously through substantially the same angles relative to the earth's surface.

19. A method according to at least claim 16, wherein said compensating mirrors (M) continuously adopt the same positions and mutual configuration as the respective telescopes (T).

## Patentansprüche

1. Teleskopsystem, das mit mindestens zwei zusammen ausrichtbaren Teleskopen (T) mit jeweiligen Eintrittspupillen (pᵢ) ausgestattet ist, wobei das Teleskopsystem mit einem optischen System (M, N) ausgestattet ist, das zum Einfangen von jeweiligen Lichtstrahlen (1), die von den Teleskopen (T) kommen, und zum Weiterleiten von diesen über jeweilige Austrittspupillen (pᵤ) zu Lichtstrahlen-Kombinationsmitteln angeordnet ist, wobei das optische System (M, N) zum Einstellen von Positionen der Austrittspupillen (pᵤ) während einer Bewegung der Teleskope (T) - die zum Ausrichten von diesen gewünscht ist - in der Weise angeordnet ist, dass seitliche Abstände zwischen den Austrittspupillen (pᵤ) homothetisch zu den seitlichen Abständen zwischen den Eintrittspupillen (pᵢ) der Teleskope (T) sind, während das optische System mit mindestens zwei Pupillenkompensationsspiegeln (M) zum Reflektieren der Lichtstrahlen (1) ausgestattet ist, die von den mindestens zwei Teleskopen (T) kommen, **dadurch gekennzeichnet, dass** die Kompensationsspiegel (M) zum Ausführen von im Wesentlichen denselben Bewegungen wie die Teleskope (T) angeordnet sind.

2. Teleskopsystem nach Anspruch 1, bei dem die Teleskope (T) und die mindestens zwei Kompensationsspiegel in der Weise angeordnet sind, dass sie um horizontale Achsen in Bezug auf die Oberfläche der Erde schwenkbar sind.

3. Teleskopsystem nach einem der vorhergehenden Ansprüche, bei dem die Teleskope (T) und die mindestens zwei Kompensationsspiegel (M) zur Drehung um vertikale Achsen in Bezug auf die Oberfläche der Erde angeordnet sind.

4. Teleskopsystem nach zumindest Anspruch 1, bei dem das System mit einer Steuerung ausgestattet ist, die ausgestaltet ist, um zumindest während der Verwendung jeden Kompensationsspiegel (M) dieselbe Bewegung wie das jeweilige Teleskop (T) ausführen zu lassen, von dem dieser Kompensationsspiegel (M) einen Lichtstrahl empfängt und weiterleitet.

5. Teleskopsystem nach einem der vorhergehenden Ansprüche, bei dem die Teleskope (T) und jeder jeweilige Kompensationsspiegel (N) an einer im Wesentlichen festen Position in Bezug auf die Oberfläche der Erde angeordnet sind.

6. Teleskopsystem nach einem der vorhergehenden Ansprüche, bei dem die Lichtstrahlen-Kombinationsmittel zum Einfangen von Lichtstrahlen, die von dem optischen System kommen, beweglich angeordnet sind.

7. Teleskopsystem nach zumindest Anspruch 1, bei dem das optische System mit mindestens einem Lenkspiegel (N) zum Einfangen von Lichtstrahlen, die von den Kompensationsspiegeln (M) kommen, und zum Lenken von ihnen zu den Lichtstrahlen-Kombinationsmitteln ausgestattet ist.

8. Teleskopsystem nach zumindest den Ansprüche 2 und 7, bei dem der Lenkspiegel (N) so angeordnet ist, dass er schwenkbar ist.

9. Teleskopsystem nach Anspruch 8, bei dem der Lenkspiegel (N) auch so angeordnet ist, dass er translatorisch bewegbar ist.

10. Teleskopsystem nach einem der vorhergehenden Ansprüche, bei dem die Anordnung der Kompensationsspiegel (M) homothetisch zu der Anordnung der jeweiligen Teleskope (T) ist.

11. Teleskopsystem nach einem der vorhergehenden Ansprüche, bei dem das System auch mit Verzögerungsstrecken (D) zum Kompensieren von Unterschieden der optischen Weglänge zwischen den Lichtstahlen ausgestattet ist.

12. Teleskopsystem nach Anspruch 11, bei dem die Verzögerungsstrecken (D) zwischen den Teleskopen (T) und dem optischen System (M, N) angeordnet sind.

13. Teleskopsystem nach einem der vorhergehenden Ansprüche, bei dem die Kompensationsspiegel (M) angeordnet sind, um die Lichtstrahlen, die von den Teleskopen (T) kommen, in demselben Winkel (α) in Bezug auf die Oberfläche der Erde weiterzuleiten wie der Winkel, in dem die Lichtstrahlen während der Verwendung durch die Teleskope (T) eingefangen werden.

14. Teleskopsystem nach einem der vorhergehenden Ansprüche, bei dem das System auf der Erde angeordnet ist.

15. Teleskopsystem nach zumindest Anspruch 1, bei dem das System im Wesentlichen außerhalb der Atmosphäre der Erde angeordnet ist, zum Beispiel auf dem Mond oder im Weltraum.

16. Verfahren zum Kombinieren von Lichtstrahlen von mindestens zwei Teleskopen (T) unter Verwendung eines optischen Systems, wobei die mindestens zwei Teleskope (T) jeweilige Eintrittspupillen (pᵢ) aufweisen, während das optische System (M, N) zumindest mit mindestens zwei Pupillenkompensationsspiegeln (M) ausgestattet ist, wobei das Verfahren zumindest die folgenden Schritte aufweist:
- die Teleskope (T) werden gemeinsam zu, zum Beispiel, einer weit entfernten Lichtquelle ausgerichtet, und
- Lichtstrahlen (1), die von den Teleskopen (T) kommen, werden durch die Kompensationsspiegel (M) eingefangen und über jeweilige Austrittspupillen (pᵤ) zu Lichtstrahlen-Kombinationsmitteln weitergeleitet, **dadurch gekennzeichnet, dass**
die Kompensationsspiegel (M) im Wesentlichen dieselben Bewegungen wie die jeweiligen Teleskope ausführen, so dass seitliche Abstände zwischen den Austrittspupillen (pᵤ) homothetisch zu den seitlichen Abständen zwischen den Eintrittspupillen (pᵢ) der Teleskope (T) sind.

17. Verfahren nach Anspruch 16, bei dem Lichtstrahlen, die von den Kompensationsspiegeln (M) kommen, durch einen Lenkspiegel (N) eingefangen und zu Lichtstrahlen-Kombinationsmitteln weitergeleitet werden.

18. Verfahren nach Anspruch 16 oder 17, bei dem die Teleskope (T) und die Kompensationsspiegel (M) im Wesentlichen kontinuierlich über im Wesentlichen dieselben Winkel in Bezug auf die Oberfläche der Erde geschwenkt werden.

19. Verfahren nach zumindest Anspruch 16, bei dem die Kompensationsspiegel (M) kontinuierlich dieselben Positionen und dieselbe gegenseitige Konfiguration wie die jeweiligen Teleskope (T) annehmen.

## Revendications

1. Système de télescopes comprenant au moins deux télescopes (T) conjointement orientables ayant des pupilles d'entrée respectives (pᵢ), le système de télescopes comprenant un système optique (M, N) disposé de manière à capter les rayons lumineux (1) respectifs provenant des télescopes (T) et à les transmettre, via des pupilles de sortie respectives (pᵤ), à des moyens de combinaison de rayons lumineux, ledit système optique (M, N) étant agencé de manière à ajuster la position desdites pupilles de sortie (pᵤ) au cours d'un mouvement - souhaité pour l'orientation - des télescopes (T) de telle sorte que les distances latérales entre ces pupilles de sortie (pᵤ) soient homothétiques par rapport aux distances latérales entre les pupilles d'entrée (pᵢ) des télescopes (T), le système optique comprenant au moins deux miroirs de compensation pupillaire (M) destinés à réfléchir les rayons lumineux (1) en provenance des au moins deux télescopes (T), **caractérisé en ce que** les miroirs de compensation (M) sont agencés de manière à exécuter sensiblement les mêmes mouvements que les télescopes (T).

2. Système de télescopes selon la revendication 1, dans lequel les télescopes (T) et lesdits au moins deux miroirs de compensation sont agencés de manière à être inclinables autour d'axes horizontaux par rapport à la surface de la terre.

3. Système de télescopes selon l'une quelconque des revendications précédentes, dans lequel les télescopes (T) et les au moins deux miroirs de compensation (M) sont agencés de manière à être mobiles en rotation autour d'axes verticaux par rapport à la surface de la terre.

4. Système de télescopes selon au moins la revendication 1, dans lequel le système est équipé d'un dispositif d'asservissement agencé de manière à ce que chaque miroir de compensation (M), au moins pendant l'utilisation, exécute le même mouvement que le télescope (T) respectif en provenance duquel ce miroir de compensation (M) reçoit un rayon lumineux et le transmet.

5. Système de télescopes selon l'une quelconque des revendications précédentes, dans lequel les télescopes (T) et chaque miroir de compensation (M) respectif sont agencés dans une position sensiblement fixe par rapport à la surface de la terre.

6. Système de télescopes selon l'une quelconque des revendications précédentes, dans lequel lesdits moyens de combinaison de rayons lumineux sont mobiles afin de capter les rayons lumineux provenant dudit système optique.

7. Système de télescopes selon au moins la revendication 1, dans lequel le système optique comprend au moins un miroir d'orientation (N) destiné à capter les rayons lumineux provenant des miroirs de compensation (M) et à les diriger vers les moyens de combinaison de rayons lumineux.

8. Système de télescopes selon au moins les revendications 2 et 7, dans lequel le miroir d'orientation (N) est inclinable.

9. Système de télescopes selon la revendication 8, dans lequel le miroir d'orientation (N) est également mobile en translation.

10. Système de télescopes selon l'une quelconque des revendications précédentes, dans lequel la disposition des miroirs de compensation (M) est homothétique par rapport à la disposition des télescopes (T) respectifs.

11. Système de télescopes selon l'une quelconque des revendications précédentes, dans lequel le système comprend également des lignes à retard (D) destinées à compenser les différences de chemin optique entre lesdits rayons lumineux.

12. Système de télescopes selon la revendication 11, dans lequel lesdites lignes de retard (D) sont disposées entre les télescopes (T) et le système optique (M, N).

13. Système de télescopes selon l'une quelconque des revendications précédentes, dans lequel lesdits miroirs de compensation (M) sont agencés de manière à transmettre les rayons lumineux provenant des télescopes (T) avec le même angle (α) par rapport à la surface de la terre que l'angle avec lequel les rayons lumineux sont captés, pendant l'utilisation, par les télescopes (T).

14. Système de télescopes selon l'une quelconque des revendications précédentes, dans lequel le système est agencé sur terre.

15. Système de télescopes selon au moins la revendication 1, dans lequel le système est agencé sensiblement hors de l'atmosphère terrestre, par exemple sur la lune ou dans l'espace.

16. Procédé de combinaison de rayons lumineux provenant d'au moins deux télescopes (T) utilisant un système optique, dans lequel les au moins deux télescopes (T) comprennent des pupilles d'entrée respectives (pᵢ), ledit système optique (M, N) comprenant au moins deux miroirs de compensation pupillaire (M), le procédé comprenant au moins les étapes suivantes :
- les télescopes (T) sont conjointement dirigés vers, par exemple, une source lumineuse lointaine ; et
- les rayons lumineux (1) provenant des télescopes (T) sont captés par les miroirs de compensation (M) et transmis, via des pupilles de sortie respectives (pᵤ), aux moyens de combinaison de rayons lumineux,
**caractérisé en ce que** les miroirs de compensation (M) exécutent sensiblement les mêmes mouvements que les télescopes respectifs, de manière à ce que les distances latérales entre lesdites pupilles de sortie (pᵤ) soient homothétiques par rapport aux distances latérales entre lesdites pupilles d'entrée (pᵢ) des télescopes (T).

17. Procédé selon la revendication 16, dans lequel les rayons lumineux provenant des miroirs de compensation (M) sont captés par un miroir d'orientation (N) et sont transmis aux moyens de combinaison de rayons lumineux.

18. Procédé selon la revendication 16 ou la revendication 17, dans lequel les télescopes (T) et les miroirs de compensation (M) sont inclinés sensiblement continuellement selon sensiblement les mêmes angles par rapport à la surface de la terre.

19. Procédé selon au moins la revendication 16, dans lequel lesdits miroirs de compensation (M) adoptent continuellement les mêmes positions et la même configuration réciproque que les télescopes (T) respectifs.
